# EUROPEAN PATENT APPLICATION

(11) **EP 2 854 349 A1**
(43) Date of publication of application: **01.04.2015**
(21) Application number: 12877311.6
(22) Date of filing: 24.07.2012
(51) Int. Cl.: H04L 12/66, H04W 8/02

(54) **METHOD AND SYSTEM FOR ESTABLISHING IPSEC TUNNEL**

(30) Priority: 21.05.2012 CN 201210158355
(71) Applicant: ZTE Corporation, Shenzhen, Guangdong 518057 (CN)
(72) Inventor: LIANG, Chaocai, Shenzhen Guangdong 518057 (CN); LIAO, Junfeng, Shenzhen Guangdong 518057 (CN); LI, Rui, Shenzhen Guangdong 518057 (CN)
(74) Representative: Modiano, Micaela Nadia
(86) International application number: PCT/CN2012/079108
(87) International publication number: WO 2013/174074

(57) **Abstract**

Provided are a method and system for establishing an IPSec tunnel. The method comprises: an base station requesting a first configuration parameter from a configuration server, and requesting a digital certificate from a CA server according to the first configuration parameter which is responded by the configuration server; the base station establishing a temporary IPSec tunnel to a security gateway according to the acquired digital certificate, and requesting a second configuration parameter from a background network management unit through the temporary IPSec tunnel; and after acquiring the second configuration parameter, the base station dismantling the temporary IPSec tunnel, and establishing a permanent IPSec tunnel between itself and the security gateway according to the second configuration parameter. By adopting an IPSec tunnel which is automatically established between an base station and a security gateway based on a PKI authentication mode, the present invention solves the problem in the prior art that the self-discovery and automatic establishment of a secure communication link cannot be realized between an base station and a core network, thus realizing the automatic configuration of the base station, and ensures the security of data transmission between the base station and the core network.

## Description

### Technical Field

The present invention relates to the field of communication security, and in particular to a method and system for establishing an IPSec tunnel.

### Background

With the rapid development of the mobile communication technology, third generation mobile communication systems have developed to a long term evolution (LTE) stage; in an LET wireless network, the number of base stations (eNodeB) is very large, and if a traditional manner is used to deploy the large number of base stations, high maintenance and operation costs will be led to. The same problem also exists in the second-generation and third-generation mobile communication system. Therefore, a 3GPP proposes a method for a self-organizing network (SON) which can provide operations such as automatic installation, configuration and maintenance and reduce manual interventions, and thus manual configurations could be greatly reduced and networks could be automatically organized. In addition, with the development of LTE, etc., all the operators propose family-class and enterprise-class Femto, and much of the family-class and enterprise-class Femto connect the core network through a transmission network of a third-party operator, so that there is a particularly high demand for security; and since normal users are faced with, complex and professional security-related configurations should be avoided, and it is better to shield all the professional terms for the users.

Since the characteristics of large data volume, complex network structure and the LTE being based on an all-IP network of telecommunication services, the 3GPP recommends to use an IP security (IPSec) tunnel to access the core network. The IPSec can complete the establishment of the IPSec tunnel through two authentication modes: the pre-shared-key (PSK) and the public key infrastructure (PKI). Two entities using the pre-shared-key to perform identity authentication and IPSec link establishment must maintain a pair of pre-shared-keys, and this limitation further reduces the deployment of security and increases the probability of error occurred. In the situation of large-scale networking, the PSK has disadvantages such as complex to configure and difficult to maintain; therefore, when there are relatively more generic sites, from the maintenance and operation and the security, most of the operators uses the PKI authentication mode.

Generally, the PKI authentication mode of base station is: realizing the pre-installation of a certificate off-line, and then a user configuring a corresponding security gateway IP and security policy. In this mode, the configuration and maintenance of each site is very complex, and the demand for the user is high, which is not suitable for ordinary families or non-professional users; therefore, there are special demands for IPSec self-configuration and security tunnel self-establishment which are based on the PKI authentication modes.

In view of the problem in the related art that the self-discovery and automatic establishment of a secure communication link cannot be realized between the base station and the core network, no effective solution has been proposed so far.

### Summary

Provided are a method and system for establishing an IPSec tunnel, so as to at least solve the problem in the above-mentioned related art that the self-discovery and automatic establishment of a secure communication link cannot be realized between a base station and a core network.

According to one aspect of the present invention, a method for establishing an IPSec tunnel is provided. The method comprises: a base station requesting a first configuration parameter from a configuration server, and requesting a digital certificate from a CA server according to the first configuration parameter which is responded by the configuration server; the base station establishing a temporary IPSec tunnel to a security gateway according to the acquired digital certificate, and requesting a second configuration parameter from a background network management unit through the temporary IPSec tunnel; and after acquiring the second configuration parameter, the base station dismantling the temporary IPSec tunnel, and establishing a permanent IPSec tunnel between itself and the security gateway according to the second configuration parameter.

Preferably, the base station requesting a first configuration parameter from a configuration server comprises: the base station establishes a TLS link with the configuration server, and requests the first configuration parameter from the configuration server.

Preferably, the first configuration parameter comprises: a temporary transmission IP address of the base station, an IP address of the IPSec tunnel established to the security gateway, an address of the CA server, a certification path, the length of a public-key of a generated certificate and an IP address of the background network management unit.

Preferably, requesting a digital certificate from a CA server according to the first configuration parameter which is responded by the configuration server comprises: after acquiring the first configuration parameter which is responded by the configuration server, the base station requests to issue an entity certificate of the base station and a root CA certificate of the CA server from the CA server by using a certificate management protocol.

Preferably, the base station establishing a temporary IPSec tunnel to a security gateway according to the acquired digital certificate comprises: the base station initiates a request for establishing a temporary IPSec tunnel through the PKI authentication mode to the security gateway; and the base station interacts the entity certificate thereof with that of the security gateway, and after the verification of the entity certificates is successful, a temporary IPSec tunnel between the base station and the security gateway is established.

Preferably, the base station requesting a second configuration parameter from a background network management unit through the temporary IPSec tunnel comprises: the base station sends a link establishment request message to the background network management unit deployed in a core network based on the temporary IPSec tunnel; after the base station successfully establishes a link to the background network management unit, the base station requests a software version package and the second configuration parameter of the base station from the background network management unit through a secure file transfer protocol; the background network management unit judges whether the base station software version in a database is newer than the current version; if yes, then the software version package and the second configuration parameter are sent to the base station; otherwise, the second configuration parameter is sent to the base station.

Preferably, after acquiring the second configuration parameter, the base station dismantling the temporary IPSec tunnel, and establishing a permanent IPSec tunnel between itself and the security gateway according to the second configuration parameter comprises: after acquiring the latest software version package and the second configuration parameter, the base station notifies the configuration server to release related configuration resources, dismantles the temporary IPSec tunnel established to the security gateway, and re-establishes a permanent IPSec tunnel to the security gateway based on the PKI authentication mode according to the second configuration parameter.

Preferably, after the base station establishes the permanent IPSec tunnel between itself and the security gateway according to the second configuration parameter, further comprising: before the validity period of the digital certificate which is issued by the CA server to the base station exceeds the validity period, the base station requests to update the certificate or update the private key from the CA server.

Preferably, the base station comprises one of the following: a macro base station, enterprise-class Pico base state and family-class Femto base station.

According to another aspect of the present invention, a system for establishing an IPSec tunnel is provided. The system comprises: a base station, a configuration server, a CA server, a background network management unit and a security gateway, wherein the base station is configured to request a first configuration parameter from the configuration server; the configuration server is configured to return the first configuration parameter to the base station in response to the request of the base station; the base station is also configured to request a digital certificate from the CA server according to the first configuration parameter which is responded by the configuration server; the CA server is configured to issue the digital certificate to the base station in response to the request of the base station; the base station is further configured to establish a temporary IPSec tunnel to the security gateway according to the acquired certificate, and request a second configuration parameter from the background network management unit through the temporary IPSec tunnel; the background network management unit is configured to return the second configuration parameter to the base station in response to the request of the base station; and the base station is further configured to dismantle the temporary IPSec tunnel after acquiring the second configuration parameter, and establish a permanent IPSec tunnel between itself and the security gateway according to the second configuration parameter.

Preferably, the first configuration parameter comprises: a temporary transmission IP address of the base station, an IP address of the IPSec tunnel established to the security gateway, an address of the CA server, a certification path, the length of a public-key of a generated certificate and an IP address of the background network management unit.

Preferably, the base station is further configured to request to update the digital certificate or update the private key from the CA server before the validity period of the digital certificate which is issued by the CA server to the base station exceeds the validity period.

Preferably, the base station comprises one of the following: a macro base station, enterprise-class PICO and family-class Femto.

By adopting an IPSec tunnel which is automatically established between the base station and the security gateway based on a PKI authentication mode, the problem in the prior art that the self-discovery and automatic establishment of a secure communication link cannot be realized between the base station and a core network has been solved, thus the automatic configuration of the base station is realized, and the security of data transmission between the base station and the core network is ensured.

### Brief Description of the Drawings

Drawings, provided for further understanding of the present invention and forming a part of the specification, are used to explain the present invention together with embodiments of the present invention rather than to limit the present invention. In the accompanying drawings:
Fig. 1 is a flowchart of a method for establishing an IPSec tunnel according to the embodiments of the present invention;
Fig. 2 is a structure diagram of a system for establishing an IPSec tunnel according to the embodiments of the present invention;
Fig. 3 is a structure diagram illustrating the network deployment of automatically establishing an IPSec tunnel based on a PKI authentication mode according to embodiment I of the present invention; and
Fig. 4 is a flowchart of automatically establishing an IPSec tunnel based on a PKI authentication mode according to embodiment I of the present invention.

### Detailed Description of the embodiments

The present invention is described below with reference to the accompanying drawings and embodiments in detail. It should be noted that the embodiments of the present application and the features of the embodiments can be combined with each other if there is no conflict.

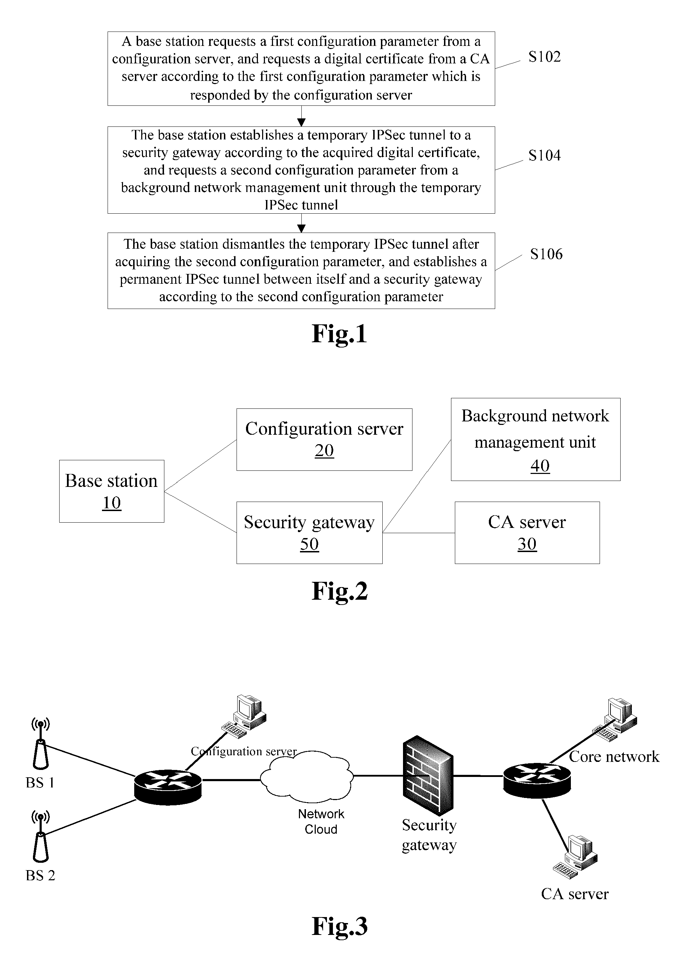

Fig. 1 is a flowchart of a method for establishing an IPSec tunnel according to the embodiments of the present invention. As shown in Fig. 1, the following steps are included:
Step S102, a base station requests a first configuration parameter from a configuration server, and requests a digital certificate from a CA server according to the first configuration parameter which is responded by the configuration server.
Step S104, the base station establishes a temporary IPSec tunnel to a security gateway according to the acquired digital certificate, and requests a second configuration parameter from a background network management unit through the temporary IPSec tunnel.
Step S106, the base station dismantles the temporary IPSec tunnel after acquiring the second configuration parameter, and establishes a permanent IPSec tunnel between the base station and a security gateway according to the second configuration parameter.

In this embodiment, a method for automatically establishing an IPSec tunnel based on a PKI authentication mode is provided, by way of automatically establishing a transmission link between the base station and a core network, automatic configuration of the base station is realized, and the security of data transmission between the base station and the core network is ensured.

In Step S102, a configuration server used for automatically allocating configuration information is deployed in the existing network, after the base station is normally powered on, the self-discovery function inside the base station broadcasts a request configuration message in the network, and the base station requests to obtain the configuration parameter from the configuration server; in order to guarantee the security of data transmission between the base station and the configuration server, the link therebetween needs to be established using a transport layer security protocol (TLS) based on the certificate authentication mode, and the used certificate can be pre-installed before the device is delivered from a factory. After the base station acquires related configuration parameters of the certificate authority (CA) server, the base station requests to issue the certificate from the CA server through a certificate manage protocol V2 (CMPv2).

In Steps S104 and S106, the base station further uses the acquired certificate to establish the IPSec security tunnel to the security gateway which is deployed in the core network, and then the base station automatically sends a message of requesting to establish a link with a network management unit, and then actively establishes a transmission link between the base station and the core network.

In the above-mentioned embodiment, in the cases that the existing network structure is not changed, automatically establishing a link after the base station is powered on can be realized, and secure communication between the base station and the background network management unit can be completed, thereby solving the problem in the related art that the self-discovery and automatic establishment of a secure communication link cannot be realized between the base station and the core network.

Fig. 2 is a structure diagram of a system for establishing an IPSec tunnel according to the embodiments of the present invention. As shown in Fig. 2, the system for establishing an IPSec tunnel is provided. The system comprises: a base station 10, a configuration server 20, a CA server 30, a background network management unit 40 and a security gateway 50, wherein the base station 10 is configured to request a first configuration parameter from the configuration server 20; the configuration server 20 is configured to return the first configuration parameter to the base station 10 in response to the request of the base station 10; the base station 10 is also configured to request a digital certificate from the CA server 30 according to the first configuration parameter which is responded by the configuration server 20; the CA server 30 is configured to issue the digital certificate to the base station 10 in response to the request of the base station 10; the base station 10 is further configured to establish a temporary IPSec tunnel to the security gateway 50 according to the acquired digital certificate, and request a second configuration parameter from the background network management unit 40 through the temporary IPSec tunnel; the background network management unit 40 is configured to return the second configuration parameter to the base station 10 in response to the request of the base station 10; and the base station 10 is further configured to dismantle the temporary IPSec tunnel after acquiring the second configuration parameter, and establish a permanent IPSec tunnel between itself and the security gateway 50 according to the second configuration parameter.

In this embodiment, by way of automatically establishing an IPSec tunnel between the base station and the security gateway based on a PKI authentication mode, the present invention solves the problem in the prior art that the self-discovery and automatic establishment of a secure communication link cannot be realized between the base station and the core network, thus realizing the automatic configuration of the base station, and ensures the security of data transmission between the base station and the core network.

### Embodiment I

Fig. 3 is a structure diagram illustrating the network deployment of automatically establishing an IPSec tunnel based on a PKI authentication mode according to embodiment I of the present invention. As shown in Fig. 3, the system comprises: a core network, a CA server, a security gateway, a configuration server and one or more base stations (shown as base station 1 and base station 2 in this figure). In the above-mentioned various network elements, functions relating to the establishment of the IPSec security tunnel as follows:
The configuration server: managing and maintaining the configuration parameters of base station, establishing a TLS link to the base station, and providing the configuration parameters which are required to establish a transmission link to the base station, such as an IP address of the base station, an IP address of a SeGW, an address of the CA server, a certification path, the length of a public-key of a generated certificate, etc., and an IP address of the background network management unit.

The base station: realizing a self-discovery function, requesting the configuration parameters from the configuration server, establishing the IPSec security tunnel to the security gateway, and requesting configurations and a software version package from the background network management unit.

The security gateway: establishing the IPSec security gateway between itself and the base station which requests to access a network element deployed inside the core network so as to ensure the security of data transmission between the base station and the core network.

The CA server: responding to certificate application, certificate update and key update request of the base station, and issuing a certificate to the base station and the security gateway; and querying the state of certificate revocation and certificate provision.

The core network: receiving a link establishment request sent by the base station, and establishing a communication link together with the base station; managing the base station, and providing the software version package, the configuration parameters, the service data, etc. to the base station.

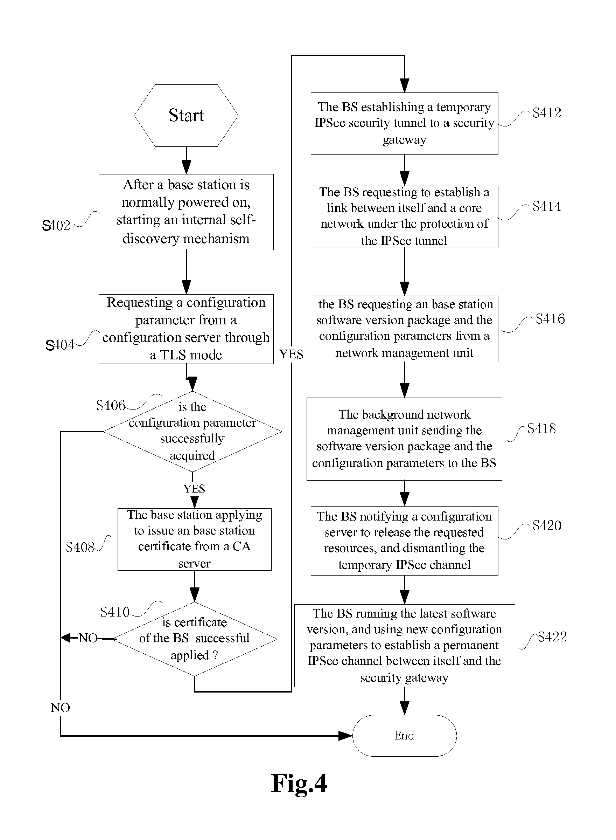

Fig. 4 is a flowchart of IPSec security tunnel establishment on the network architecture as shown in Fig. 3, and the method realizes the automatic establishment of the IPSec security tunnel based on a PKI authentication mode. In this embodiment, a configuration server used for automatically allocating configuration information is firstly deployed in a existing or new-established network, and an TLS link, a CA server and a security gateway could be supported to be established; after the base station is normally powered on, the base station firstly uses the TLS to establish a connection with the configuration server through an internal self-discovery function, and requests to acquire an IP address of the base station, an IP address of the security gateway, an IP address of the core network and related configuration parameters of the CA server from the configuration server; then the base station requests to acquire a certificate from the CA server by using a CMPv2 protocol, and the base station establishes the IPSec security tunnel based on a PKI authentication mode between itself and the security gateway; and finally, a communication link between the base station and the core network is got through, and thus the base station automatically joining the network operation and maintenance management is completed.

As shown in Fig. 4, the following steps are mainly included:
Step S402, after the base station is normally powered on, an internal self-discovery mechanism is started.
Step S404, the base station establishes a TLS with a configuration server based on a certificate authentication mode, and after the link is successfully established, the base station requests a parameter configuration message from the configuration server; and the configuration server responds to the parameter configuration request message of the base station, and returns configuration parameters such as a temporary transmission IP address of the base station, an IP address of the IPSec tunnel established to the security gateway, an address of the CA server, a certification path, the length of a public-key of a generated certificate and an IP address of the background network management unit.
Step S406, it is judged whether response configuration parameter of the configuration server is acquired.
Step S408, after acquiring the response configuration parameter of the configuration server, the base station requests to issue an entity certificate of the base station and a root CA certificate of the CA server from the CA server by using a certificate manage protocol (CMPv2); if the base station entity certificate is not directly issued by the root CA certificate, the CA server is also required to send intermediate CA certificate chains to the base station together.
Step S410, it is judged whether certificate application is successful.
Step S412, after the base station acquires the certificate, the base station establishes a temporary IPSec security tunnel to the security gateway; and the following steps are specifically included:
   the base station actively initiates a request to establish a temporary IPSec security tunnel based on the PKI authentication mode to the security gateway; the security gateway pre-installs the entity authenticate and the root CA certificate which are issued by the CA server; when it is received the eNode requests to establish the IPSec security tunnel, the security gateway requests the base station entity certificate from the base station; the base station responds the request of the security gateway, and sends the base station entity certificate to the security gateway; meanwhile, the base station may also request the security gateway to send the entity certificate thereof; after receiving the base station entity certificate, the security gateway verifies the validity of the certificate, comprising the verification of sensitive information, such as the validity of a certificate signature, the certificate's validity period and the certificate status; after the verification of the certificate is successful, the security gateway returns the entity certificate thereof to the base station; after receiving the entity certificate of the security gateway, the base station also verifies the validity of the certificate; at the moment, after the verification of the certificate is successful, the temporary IPSec security tunnel link between the base station and the security gateway has been successfully established.
Step S414, the base station sends a link establishment request message to the background network management unit which is deployed in the core network again through the self-discovery mechanism; at the moment, all the communication data between the base station and the background network management unit is protected under the base station and the securely established IPSec security tunnel.
Step S416, after the link between the background network management unit and the base station is successfully established, the base station requests the base station software version package and the configuration parameter from the network management unit through the secure file transfer protocol.
Step S418, the background network management unit judges whether the base station software version in a database is newer than the current revision, if yes, then sends the software version package and the configuration parameters to the base station together; otherwise, only sends the configuration parameters.
Step S420, after acquiring the latest software version package and the configuration parameters, the base station notifies the configuration server to release related configuration resources, and dismantles an IPSec security channel established between itself and the security gateway.
Step S422, the base station uses the acquired new configuration parameters to obtain a permanent IP, and re-establishes a permanent IPSec security channel between itself and the security gateway based on the PKI authentication mode. At the moment, the base station is already normally work. Data transmissions between the base station and the core network are all protected by the IPSec security channel.

In the above-mentioned embodiment, when the validity period of the digital certificate which is issued by the CA server to the base station is about to exceed the validity period, the base station can also request to update the certificate or update the private key from the CA server by using an automatic trigger mechanism, so as to ensure the validity of the base station certificate.

In addition, it should be noted that the method for establishing an IPSec security tunnel which is described in the above-mentioned various embodiments of the present invention can be widely applied to various kinds of base stations, for example, a traditional macro base station, an enterprise-class Pico base station or family-class Femto base station, etc.

In another embodiment the present invention, software for establishing an IPSec tunnel is further provided, and the software is used for executing the technical solutions described in the above-mentioned embodiment.

In another embodiment of the present invention, a storage medium is further provided, wherein the storage medium stores the above-mentioned software, and the storage medium comprises but not limited to an optical disk, a floppy disk, a hard disk, erasable programmable memory, etc.

The above-mentioned various embodiments of the present invention proposes a method and system for establishing an IPSec security tunnel based on an PKI authentication mode, in the cases that the existing network structure is not changed, automatically establishing a link after the base station is powered on can be realized, and secure communication between the base station and the background network management unit can be completed, thereby solving the problem in the related art that the self-discovery and automatic establishment of a secure communication link cannot be realized between the base station and the core network. By means of the simplest configuration, the problem of complex to configure and maintain in the prior art can be solved as far as possible, and the security between the base station and the security gateway of the core network can be ensured.

Apparently, those skilled in the art shall understand that the above modules or steps of the present invention can be realized by using general purpose calculating device, can be integrated in one calculating device or distributed on a network which consists of a plurality of calculating devices, and alternatively they can be realized by using the executable program code of the calculating device, so that consequently they can be stored in the storing device and executed by the calculating device, in some cases, can perform the shown or described step in sequence other than herein, or they are made into integrated circuit module respectively, or a plurality of modules or steps thereof are made into one integrated circuit module. In this way, the present invention is not restricted to any particular hardware and software combination.

The above description is only example embodiments of the present document and is not intended to limit the present invention, and the present invention can have a variety of changes and modifications for ordinary person skilled in the field. Any modification, equivalent replacement, or improvement made within the principle of the present invention shall all fall within the protection scope as defined in the appended claims of the present invention.

## Claims

1. A method for establishing an IPSec tunnel, **characterized by** comprising:
a base station requesting a first configuration parameter from a configuration server, and requesting a digital certificate from a CA server according to the first configuration parameter which is responded by the configuration server;
the base station establishing a temporary IPSec tunnel to a security gateway according to the acquired digital certificate, and requesting a second configuration parameter from a background network management unit through the temporary IPSec tunnel; and
the base station dismantling the temporary IPSec tunnel after acquiring the second configuration parameter, and establishing a permanent IPSec tunnel between the base station and the security gateway according to the second configuration parameter.

2. The method according to claim 1, **characterized in that** the base station requesting a first configuration parameter from a configuration server comprises:
the base station establishing a TLS link with the configuration server, and requesting the first configuration parameter from the configuration server.

3. The method according to claim 1, **characterized in that** the first configuration parameter comprises: a temporary transmission IP address of the base station, an IP address of the IPSec tunnel established to the security gateway, an address of the CA server, a certification path, the length of a public-key of a generated certificate and an IP address of the background network management unit.

4. The method according to claim 3, **characterized in that** requesting a digital certificate from the CA server according to the first configuration parameter which is responded by the configuration server responds comprises:
after acquiring the first configuration parameter which is responded by the configuration server, the base station requesting to issue an entity certificate of the base station and a root CA certificate of the CA server from the CA server by using a certificate management protocol.

5. The method according to claim 1, **characterized in that** the base station establishing a temporary IPSec tunnel to the security gateway according to the acquired digital certificate comprises:
the base station initiating a request for establishing the temporary IPSec tunnel through the PKI authentication mode to the security gateway; and
the base station interacting an entity certificate of the base station with that of the security gateway, and after the verification of the entity certificates is successful, the temporary IPSec tunnel between the base station and the security gateway is established.

6. The method according to claim 1, **characterized in that** the base station requesting a second configuration parameter from a background network management unit through the temporary IPSec tunnel comprises:
the base station sending a link establishment request message to the background network management unit which is deployed in a core network based on the temporary IPSec tunnel;
after the link between the base station and the background network management unit is successfully established, the base station requesting the software version package of the base station and the configuration parameter from the background network management unit through a secure file transfer protocol; and
the background network management unit judging whether the base station software version in a database is newer than the current revision, if yes, then sending the software version package and the second configuration parameter to the base station; otherwise, only sending the second configuration parameter to the base station.

7. The method according to claim 6, **characterized in that** the base station dismantling the temporary IPSec tunnel after acquiring the second configuration parameter, and establishing a permanent IPSec tunnel between itself and the security gateway according to the second configuration parameter comprise:
after acquiring the latest software version package and the second configuration parameter, the base station notifying the configuration server to release related configuration resources, dismantling the temporary IPSec tunnel established to the security gateway, and re-establishing a permanent IPSec tunnel to the security gateway based on the PKI authentication mode according to the second configuration parameter.

8. The method according to any one of claims 1-7, **characterized in that** after establishing a permanent IPSec tunnel between the base station and the security gateway according to the second configuration parameter, the method further comprises:
the base station requesting to update a digital certificate or update a private key from the CA server before the validity period of the digital certificate which is issued by the CA server to the base station exceeds the validity period.

9. The method according to claim 8, **characterized in that** the base station comprises one of the following:
Macro base station, Pico base station or Femto base station.

10. A system for establishing an IPSec tunnel, **characterized by** comprising: an base station, a configuration server, a CA server, a background network management unit and a security gateway, wherein,
the base station is configured to request a first configuration parameter from the configuration server;
the configuration server is configured to return the first configuration parameter to the base station in response to the request of the base station;
the base station is also configured to request a digital certificate from the CA server according to the first configuration parameter which is responded by the configuration server;
the CA server is configured to issue the digital certificate to the base station in response to the request of the base station;
the base station is further configured to establish a temporary IPSec tunnel to the security gateway according to the acquired digital certificate, and request a second configuration parameter from the background network management unit through the temporary IPSec tunnel;
the background network management unit is configured to return the second configuration parameter to the base station in response to the request of the base station; and
the base station is further configured to dismantle the temporary IPSec tunnel after acquiring the second configuration parameter, and establish a permanent IPSec tunnel between the base station and the security gateway according to the second configuration parameter.

11. The system according to claim 10, **characterized in that** the first configuration parameter comprises: a temporary transmission IP address of the base station, an IP address of the IPSec tunnel established to the security gateway, an address of the CA server, a certification path, the length of a public-key of a generated certificate and an IP address of the background network management unit.

12. The system according to claim 10, **characterized in that** the base station is further configured to request to update the digital certificate or update a private key from the CA server before the validity period of the digital certificate which is issued by the CA server to the base station exceeds the validity period.

13. The system according to any one of claims 10 to 12, **characterized in that** the base station comprises one of the following:
Macro base station, Pico base station or Femto base station.
